# EUROPÄISCHE PATENTSCHRIFT

(11) **EP 0 472 541 B1**
(45) Veröffentlichungstag und Bekanntmachung des Hinweises auf die Patenterteilung: **29.06.1994**
(21) Anmeldenummer: 90906780.3
(22) Anmeldetag: 11.05.1990
(51) Int. Cl.: F16C 33/10, F16C 33/66, F16N 7/18

(54) **Lageranordnung mit einer Selbstfördereinrichtung für die Schmierung**
Bearing arrangement with a self-feeding lubricating device
Arrangement de coussinet avec dispositif de refoulement automatique de lubrifiant

(30) Priorität: 18.05.1989 AT 1194/89
(43) Veröffentlichungstag der Anmeldung: 04.03.1992
(73) Patentinhaber: ELIN ENERGIEVERSORGUNG GESELLSCHAFT m.b.H., 1141 Wien (AT)
(72) Erfinder: ZELLER, Werner, A-8160 Weiz (AT)
(74) Vertreter: Krause, Peter
(86) Internationale Anmeldenummer: AT9000045
(87) Internationale Veröffentlichungsnummer: WO9014523

(56) Entgegenhaltungen:
- DE-A- 3 343 593
- GB-A- 1 238 199
- US-A- 4 605 101

## Beschreibung

Die Erfindung betrifft eine Lageranordnung mit einer Selbstfördereinrichtung für die Schmierung eines Lagers, die eine Ölzulauf- und eine Ölablauföffnung aufweist.

Für die Schmierung der Lager von Maschinen gibt es eine große Anzahl verschiedener Systeme. Für die Lagerschmierung von Großmaschinen ist die Niederdrucköl-Umlaufschmierung eine häufig verwendete Methode. Dabei wird mittels einer Pumpe Öl aus einem Öltank, unter Zwischenschaltung einer Kühleinrichtung und eines Filters (oder einer Kühler-Filter-Einheit) in einen Hochbehälter gefördert. Von diesem strömt das Öl durch Schwerkraft zu den zu schmierenden Lagern. Diese Art der Schmierung ist sehr leistungsfähig und, da die umlaufende Ölmenge über ein Filter geführt wird und deshalb eine bestimmte zeitlang wiederverwendet werden kann, auch wirtschaftlich.

Trotzdem hat dieses System mehrere Nachteile, die sich, vor allem bei Anlagen von großer Wichtigkeit, als sehr gravierend erwiesen haben.

Für wichtige Anlagen, bei denen das erwähnte System angewendet wird, werden üblicherweise zwei Ölpumpen vorgesehen, um bei Ausfall einer Pumpe auf die jeweils andere umschalten zu können. Zur weiteren Erhöhung der Sicherheit kann jede dieser Pumpen aus einem anderen Stromversorgungsnetz gespeist werden. Normalerweise wird die eine Pumpe mit einem Drehstrommotor, die andere mit einem Gleichstrommotor betrieben, wobei der Gleichstrom meist einem batteriegespeisten Notstrom-Versorgungssystem entnommen wird. Nun besteht aber selbstverständlich die Gefahr, daß beide Stromversorgungssysteme ausfallen oder beide Motoren oder beide Pumpen innerhalb kurzer Zeit Schaden erleiden. In solchen Fällen muß dann die zu schmierende Maschine auf jeden Fall abgestellt werden. Die Ölversorgung funktioniert, auch bei entsprechend optimaler Auslegung des Hochbehälters, nur noch kurze Zeit (übliche Größenordnungen sind etwa fünf bis zehn Minuten).

Ein weiterer Nachteil besteht darin, daß vor der Startfreigabe für die zu schmierende Maschine zuerst die Füllung des Hochbehälters mit Öl durchgeführt werden muß. Bei manchen Lagerausführungen verzögert sich der Start der Maschine auch, weil vorher die Lager mit Öl zu füllen sind.

Der Hochbehälter ist nicht nur höher als die zu schmierende Maschine, sondern oft in einem darüberliegenden, anderen Raum untergebracht. In der Praxis ergeben sich sehr oft Schwierigkeiten aus der Diskrepanz von benötigtem Platzbedarf und dem tatsächlich zur Verfügung stehenden Platz. Eine weitere Schwachstelle sind oft auch die drei zum Hochbehälter führenden Rohre (Zulauf-, Ablauf- und Überlaufrohr). Sie benötigen nicht nur sehr oft kostbaren Platz, sondern sie lassen sich manchmal nur mit größten Schwierigkeiten so verlegen, daß tote Ecken und Erwärmungszonen vermieden werden.

In der US, A, 4605101 wird ein preiswertes, in sich geschlossenes Schmierungssystem für ein im Traggehäuse aufsitzendes Lauflager für eine Turbinenwelle vorgestellt. Dieses Schmierungssystem besteht aus einer ersten Dichtungsanordnung zwischen Welle und Gehäuse, und zwar in axialem Abstand zur einen Seite der Lageranordnung, und einer zweiten Dichtungsanordnung zwischen Welle und Gehäuse, und zwar in axialem Abstand zur anderen Seite der Lageranordnung. Die Lageranordnung ist derart ausgebildet, daß sich im Traggehäuse eine Ölsumpf-Kammer ergibt, welche das Schmiermittel enthält. Jede Lageranordnung beinhaltet einen elastischen O-Ring zwischen Welle und Traggehäuse, sowie zwei Flügelräder, welche innerhalb der Ölsumpf-Kammer mit der Welle verbunden sind und während der Wellenrotation das Schmiermittel von der Ölsumpf-Kammer durch die Lageranordnung hindurch und zurück zur Ölsumpf-Kammer pumpen.

Zwar ist das in der US, A, 4605101 vorgeschlagene Schmierungssystem kostengünstig, weist jedoch den Nachteil auf, daß das Schmiermittel oft erneuert werden muß, wodurch Betriebsunterbrechungen erforderlich sind.

In der GB, A, 1238199 wird eine Rollenlageranordnung beschrieben, wobei es speziell um ein schnellaufendes Wellenrollenlager geht. Es wird ein Rollenlager verwendet, das einen Innen- und einen Außenlaufring sowie einen Rollenkäfig samt den zugehörigen Rollen aufweist. Laut Hauptanspruch sind Mittel vorgesehen, welche bei Rotation des Lagers wirksam werden und eine hydraulische Kopplung des Rollenkäfigs bewirken. In den Unteransprüchen der GB, A, 1238199 werden verschiedene solcher Mittel vorgeschlagen, wobei in einem der Ansprüche Öl oder Öl-Luft-Gemisch genannt ist. Konkret wird dabei das Lager starr auf der Welle montiert, wobei das Medium, welches das Drehmoment von der Welle auf den Rollenkäfig überträgt, Schmieröl oder Öl-Luft-Gemisch ist. Dieses Schmier- und Übertragungsmedium wird durch Kanäle in der Welle und im Innenlaufring in den Rollenkäfig befördert. Im Außenlaufring sind beidseitig Ölaustrittskanäle vorgesehen. Dadurch kann das Schmier- und Übertragungsmedium abfließen, ohne die Rollenbewegung zu verzögern.

Bei der in der GB, A, 1238199 vorgestellten Erfindung geht es primär nicht um die Schmierung des Lagers, sondern darum, die kinematischen Laufbedigungen der Rollen bei Vorbelastung der Welle zu verbessern. Nachteilig ist, daß bei schwerem stoßweisem Betrieb eine konstante Schmierung der Rollen nicht gewährleistet ist.

Die DE, A, 3343593 befaßt sich mit der Schmierung eines Wälzlagers mit großem Durchmesser. Konkret geht es dabei um die Verbesserung jenes bekannten Schmierungssystems von schnelldrehenden Wälzlagern, deren Kugeln oder Rollen mit einem Ölbad nicht in Berührung kommen und deshalb mittels Schleuderscheiben, Schleuderringen und dergleichen, welche das Öl nach oben schleudern, eine Schmierung erhalten. In der DE, A, 3343593 wird nun vorgeschlagen, den in das Ölbad eintauchenden Teil der mit dem sich drehenden Teil des Lagers fest verbundenen Schleuderscheiben als sich axial erstreckenden Ansatz auszubilden. Die Schleuderscheibe wird eng von einer Kammer umschlossen, die oben, zum Kugellager hin, offen ist. In diesem Bereich wird der Ölfilm zum Kugellager hingedrückt.

Der Nachteil des in der DE, A, 3343593 vorgeschlagenen Schmierungssystems besteht darin, daß damit keine konstante Ölmengenzufuhr zum Lager gewährleistet werden kann, wodurch bei Maschinen mit extrem hohen Drehzahlen Betriebsstörungen auftreten können.

Aufgabe der Erfindung ist es daher, ein System zur Lagerschmierung von Maschinen, vorzugsweise Großmaschinen, zu schaffen, welches alle erwähnten Nachteile vermeidet sowie große Betriebssicherheit und Wirtschaftlichkeit aufweist.

Die Aufgabe wird durch die Erfindung gelöst. Diese ist dadurch gekennzeichnet, daß die Selbstfördereinrichtung eine Seitenkanalpumpe mit vorzugsweise ebenen Förderschaufeln aufweist, die auf derselben Welle oder Achse wie das Lager, vorzugsweise unmittelbar an das Lager anschließend, angeordnet ist, und daß jede Förderschaufel in Höhe des Seitenkanals eine dem Seitenkanalquerschnitt äquivalente und mit diesem korrespondierende Ausnehmungen aufweist.

Daraus ergibt sich der Vorteil, daß die Lagerschmierung unabhängig von einer Hilfsenergiequelle und somit äußerst betriebssicher und wirtschaftlich durchführbar ist. Beginn und Zeitdauer der Achsen- bzw. Wellendrehung stimmen mit Betriebsbeginn und -dauer der Ölversorgung für das zu schmierende Lager auf jeden Fall überein.

Vorteilhaft ist zudem, daß der in eine spiralförmige Bewegung versetzte Ölförderstrom in der Seitenkanalpumpe nicht abreißt und somit eine unterbrechungslose Schmierung gewährleistet ist.

Ein weiterer Vorteil besteht darin, daß aufgrund der lediglich sehr kurzen Ölrohrleitungen ein Einbruch vom Kühlerwasser in das Ölleitungssystem sehr schnell erkennbar ist.

In einer Ausgestaltung der Erfindung ist der Seitenkanal über einen Teilbereich des Gesamtkreisumfanges der Seitenkanalpumpe vorgesehen.

Dies ist vorteilhaft, weil durch entsprechende Auslegung der Seitenkanallänge der Öldruck - die Umdrehungsgeschwindigkeit der Seitenkanalpumpe ist ja durch die Welle oder Achse, auf der die Seitenkanalpumpe aufgesetzt ist, unveränderlich vorgegeben - den jeweiligen Betriebserfordernissen genau angepasst werden kann.

Als besondere Weiterbildung der Erfindung ist die Länge des Seitenkanals durch auswechselbare kreisringsegmentförmige Einlageteile veränderbar.

Dadurch ist es möglich, bei Maschinen, deren Betriebsbedingungen sich von Zeit zu Zeit sehr stark ändern, die Öldruckregulierung den jeweiligen Betriebsbedigungen anzupassen, ohne daß die Seitenkanalpumpe ausgetauscht zu werden braucht.

Ein zusätzliches Merkmal der Erfindung besteht darin, daß das Ölleitungssystem über einen Kühler und/oder ein Filter oder eine Kühler-Filtereinheit geführt ist.

Durch entsprechendes Filtern und Kühlen des Öles ergibt sich eine weitere Erhöhung der Betriebssicherheit, weil dadurch die Kühlung des Lagers sichergestellt ist. Auf diese Weise wird die Wirtschaftlichkeit des erfindungsgemäßen Systems weiter erhöht.

An Hand eines Ausführungsbeispieles soll die Erfindung näher erläutert werden. Die Fig. zeigt, in Schnittdarstellung, die Lagerung eines Wellenendes in einem zu schmierenden Lager, sowie eine zugehörige Seitenkanalpumpe.

Das Wellenende (2) einer Welle (1) ist, zur Aufnahme radialer und axialer Kräfte, mit einem Wellenbund (3) ausgestattet, der von einem Kombi-Gleitlager (4) umschlossen wird.

Auf demselben Wellenende (2), unmittelbar neben dem Kombi-Gleitlager (4), ist eine Seitenkanalpumpe (5) angeordnet, auf dessen Laufrad (6) spezielle Förderschaufeln (20) aufgesetzt sind. Ein Seitenkanal (7) ist mit halbkreisförmigem Querschnitt ausgeführt. Die Förderschaufeln (20 sind in Höhe des Seitenkanals (7) mit einer halbkreisförmigen, dem Seitenkanalquerschnitt äquivalenten und mit diesem korrespondierenden Ausnehmung (21) versehen.

Zur Verhinderung eines Ölaustrittes aus der und das Eindringen von Verunreinigungen in die Seitenkanalpumpe (5) sind zwei Dichtringe (8, 9) vorgesehen. Im unteren Teil des Seitenkanals (7) ist eine Ölzulauföffnung (10), im oberen Teil eine Ölablauföffnung (11) angeordnet. Mittels eines Halteringes (12) ist die Seitenkanalpumpe (5) an das Kombi-Gleitlager (4) geschraubt. Das Kombi-Gleitlager (4) und die Seitenkanalpumpe (5) sind von den Stützkörpern (14, 15) eines zweiteiligen Lagergehäuses (13) umschlossen. Ölkanäle (16), die zu den Segmenten (22) des Kombi-Gleitlagers (4) führen, sind mittels einer Öldruckleitung (17) mit der Ölablauföffnung (11) der Seitenkanalpumpe (5) verbunden. In je einer Nut am Wellenende (2) sind zwei Spritzringe (18, 19) montiert, die einen Ölaustritt aus dem Kombi-Gleitlager (4) verhindern.

Vor der ersten Inbetriebnahme ist das Kombi-Gleitlager (4) so weit mit Öl zu füllen, daß der Ölspiegel etwa in der Mitte zwischen den Außendurchmessern der Welle (1) und des unteren Teiles des Seitenkanals (7) steht. Die zwischen den Schaufeln und der Gehäusewandung befindliche Ölmenge wird bei der Drehung des Laufrades (6) von den radial stehenden Förderschaufeln (20) einerseits durch die Fliehkraft nach außen, anderseits in den Seitenkanal gedrängt und somit aus dem Saugraum der Seitenkanalpumpe (5) in deren Druckraum befördert. Durch Übertritt des Öles aus dem rotierenden Teil der Seitenkanalpumpe (5) in den Seitenkanal (7), bzw. aus dem Seitenkanal (7) in den rotierenden Teil, erfolgt ein Druckaufbau. Dabei erfährt das beförderte Öl im Seitenkanal (7) eine spiralförmige Bewegung. Es tritt am oberen Ende des Seitenkanals (7) bei der Ölablauföffnung (11) aus und strömt durch die Öldruckleitung (17) in die Ölkanäle (16) des Kombi-Gleitlagers (4). Die Ölkanäle (16) enden an den Laufbahnen des Kombi-Gleitlagers (4) und leiten somit das Öl unmittelbar auf die Laufflächen des Kombi-Gleitlagers (4).

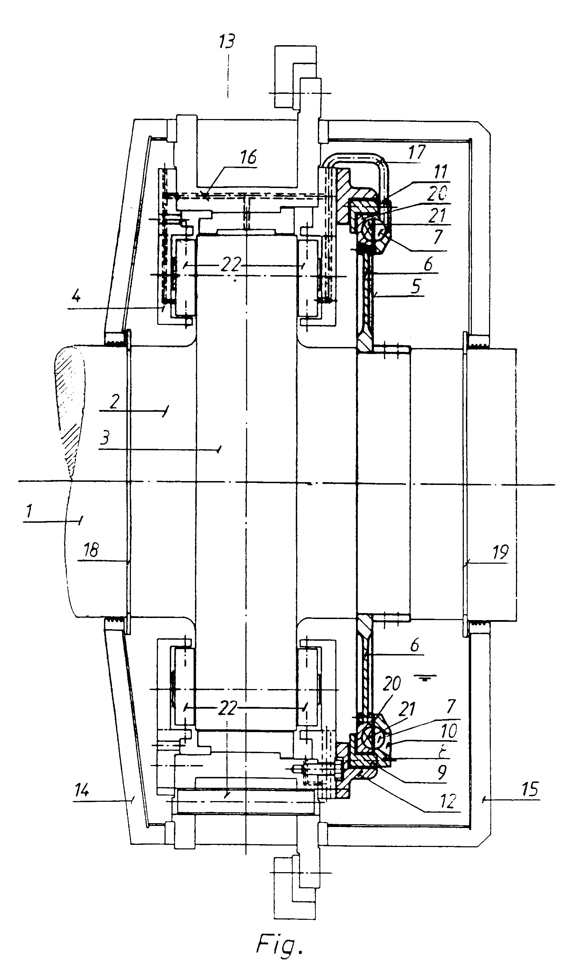

Durch das Herausschleudern des Öles aus den Förderschaufeln (20) entsteht um die Schaufelradachse - das ist im vorliegenden Fall der Teil des Wellenendes (2), auf den das Laufrad (6) aufgesetzt ist - sowie an der Ölzulauföffnung (10) ein Unterdruck, welcher bewirkt, daß Öl aus einer/an einen Kühler oder einen Filter oder eine Kühler-Filtereinheit - diese sind in der Zeichnung nicht dargestellt - angeschlossene Ölansaugleitung nachströmt. Durch entsprechende Auslegung der Seitenkanallänge - eine bewährte Größenordnung ist beispielsweise 270 ° des Gesamtkreisumfanges der Seitenkanalpumpe (5) - wird die Regulierung des Ölschmiersystems für den jeweils verwendeten Lagertyp optimiert. Bei Verwendung eines Kühlers oder einer Kühler-Filtereinheit wird, zusätzlich zur Schmierung, auch eine Kühlung des Lagers vorgenommen.

## Patentansprüche

1. Lageranordnung mit einer Selbstfördereinrichtung für die Schmierung eines Lagers (4), die eine Ölzulauföffnung (10) und eine Ölablauföffnung (11) aufweist, **dadurch gekennzeichnet** , daß die Selbstfördereinrichtung eine Seitenkanalpumpe (5) mit vorzugsweise ebenen Förderschaufeln (20) aufweist, die auf derselben Welle (1) oder Achse wie das Lager, vorzugsweise unmittelbar an das Lager anschließend, angeordnet ist, und daß jede Förderschaufel (20) in Höhe des Seitenkanals (7) eine dem Seitenkanalquerschnitt äquivalente und mit diesem korrespondierende Ausnehmung (21) aufweist.

2. Lageranordnung nach Anspruch 1, **dadurch gekennzeichnet**, daß der Seitenkanal (7) über einen Teilbereich des Gesamtkreisumfanges der seitenkanalpumpe (5) vorgesehen ist.

3. Lageranordnung nach Anspruch 2, **dadurch gekennzeichnet**, daß die Länge des Seitenkanals (7) durch auswechselbare kreisringsegmentförmige Einlageteile veränderbar ist.

4. Lageranordnung nach einem der Ansprüche 1 bis 3, **dadurch gekennzeichnet**, daß das Ölleitungssystem über einen Kühler und/oder ein Filter oder eine Kühler-Filtereinheit geführt ist.

## Claims

1. An automatic delivery device for lubricating a bearing, comprising an oil inlet and an oil outlet opening as well as a side channel pump with preferably plane delivery blades, characterized in that the side channel pump (5) is disposed on the same shaft (1) or axle as the bearing, preferably immediately adjoining the bearing, and in that each delivery blade (20) has a cutout at the height of the side channel (7) equivalent to and corresponding with the cross section of the side channel.

2. An automatic delivery device in accordance with claim 1, characterized in that the side channel (7) is provided over a portion of the total periphery of the circle of the side channel pump (7).

3. An automatic delivery device in accordance with claim 2, characterized in that the length of the side channel (7) is adjustable by means of exchangeable inserts in the form of segments of a circle.

4. An automatic delivery service in accordance with one of claims 1 to 3, characterized in that the oil line system is run through a cooler and/or a filter or a cooling and filtering unit.

## Revendications

1. Dispositif de transport automatique pour la lubrification d'un palier, qui présente une ouverture d'entrée d'huile et une ouverture de sortie de l'huile ainsi qu'une pompe régénérative avec des ailettes planes de préférence, caractérisé en ce que la pompe régénérative (5) est disposée sur le même arbre (1) ou axe que le palier, de préférence raccordée directement sur le palier, et en ce que chaque ailette (20) présente à la hauteur du canal latéral (7) un évidement équivalant à la section du canal latéral et correspondant avec celle-ci.

2. Dispositif de transport automatique selon la revendication 1, caractérisé en ce que le canal latéral (7) est prévu sur un secteur partiel de la périphérie circulaire totale de la pompe régénérative (5).

3. Dispositif de transport automatique selon la revendication 2, caractérisé en ce que la longueur du canal latéral (7) peut être modifiée par des inserts interchangeables en forme d'anneaux de cercle.

4. Dispositif de transport automatique selon l'une ou l'ensemble des revendications 1 à 3, caractérisé en ce que le système de conduites d'huile passe par un refroidisseur et/ou un filtre ou une unité de refroidissement et de filtrage.
